# DEMANDE DE BREVET EUROPEEN

(11) **EP 1 769 701 A1**
(43) Date de publication de la demande: **04.04.2007**
(21) Numéro de dépôt: 06300998.9
(22) Date de dépôt: 28.09.2006
(51) Int. Cl.: A47B 88/04, A47B 88/00

(54) **Meuble pourvu de moyens de raccordement éléctrique**

(30) Priorité: 03.10.2005 FR 0552992; 03.10.2005 FR 0552993
(71) Demandeur: SALM SA Société par actions simplifiée, 68660 LIEPVRE (FR)
(72) Inventeur: Klein, Olivier, 68000 Colmar (FR)
(74) Mandataire: Rhein, Alain

(57) **Abrégé**

L'invention concerne un meuble (1) comportant au moins un caisson (2) recevant au moins un élément mobile (3) en translation de type tiroir monté sur glissières (4) aptes, au moins en phase finale de fermeture, à assurer une force de rappel automatique dudit élément mobile (3) dans sa position refermée, caractérisé par le fait qu'il comporte des moyens (8) de raccordement électrique sous forme d'une ou plusieurs paires de contacteurs (9,10), un contacteur (9) étant apte à équiper l'élément mobile (3), l'autre contacteur (10) équipant le caisson (2), l'un au moins de ces contacteurs (10) est apte à être repoussé par des moyens de rappel élastiques en direction de l'autre contacteur (9) de ladite paire, lesdits moyens de rappel élastiques étant définis de manière à procurer une résistance globale à la fermeture de l'élément mobile (3) inférieure à la force de rappel automatique de ce dernier procurée par les glissières (4).

## Description

La présente invention concerne un meuble comportant au moins un caisson recevant au moins un élément mobile en translation de type tiroir monté sur glissières aptes, au moins en phase finale de fermeture, à assurer une force de rappel automatique dudit élément mobile dans sa position refermée.

La présente invention entre dans le domaine du meuble et mobilier, en particulier dans le domaine du raccordement électrique d'un élément mobile par rapport au caisson d'un meuble, notamment un tiroir.

L'invention concerne donc l'alimentation électrique de l'intérieur d'un élément mobile de meuble et, dans le cadre d'une application toute particulière, vise l'alimentation électrique d'une façade lumineuse solidaire dudit élément mobile.

En général, l'alimentation électrique d'un élément mobile par rapport à un élément fixe est réalisée au travers d'une longueur supplémentaire du câble d'alimentation équivalente à la longueur de la course dudit élément mobile. Toutefois, dans le cas d'un tiroir, cette longueur de câble peut en gêner la fermeture, l'ouverture et le déplacement. C'est pour cette raison qu'il est possible d'alimenter uniquement ledit tiroir en position fermée au travers de deux contacteurs coopérant entre eux et fixés, d'une part, sur le caisson du meuble et, d'autre part, sur le tiroir, la connexion électrique étant coupée lors de l'ouverture du tiroir. Pour ce faire, un contacteur est apte à coopérer avec l'autre contacteur, généralement par emboîtement. Un tel dispositif est décrit dans le document US 2002/171335.

Dans le cas d'un tiroir monté sur glissières, cette solution présente l'inconvénient de ne pas permettre une fermeture totale dudit tiroir, notamment en raison de la résistance à l'emboîtement des contacteurs. De plus, l'utilisation de plus en plus fréquente de tiroirs comprenant des glissières pourvue de moyens de rappel automatique en position de fermeture, par exemple dans les cuisines, rend encore plus difficile la mise en oeuvre de contacteur dans la mesure où leur emboîtement s'oppose au rappel automatique du tiroir en position de fermeture.

De plus, le coulissement du tiroir présente un jeu qui peut empêcher le parfait emboîtement des contacteurs et encore une fois gêner la fermeture du tiroir.

Un autre inconvénient réside dans le vieillissement prématuré des contacteurs électriques équipant des éléments mobiles.

L'invention a pour but de pallier les inconvénients de l'état de la technique précités. De plus, l'invention offre une longévité et une résistance suffisante aux critères de qualité des fabricants de mobilier, en particulier des mobiliers de cuisine.

Pour ce faire, elle propose un meuble comportant au moins un caisson recevant au moins un élément mobile en translation de type tiroir monté sur glissières aptes, au moins en phase finale de fermeture, à assurer une force de rappel automatique dudit élément mobile dans sa position refermée.

Un tel meuble se caractérise par le fait qu'il comporte des moyens de raccordement électrique par contact sous forme d'une ou plusieurs paires de contacteurs, chaque paire comportant un contacteur apte à équiper l'élément mobile, l'autre contacteur équipant le caisson, l'un au moins de ces contacteurs, prévu mobile parallèlement au déplacement de l'élément mobile, est apte à être repoussé par des moyens de rappel élastiques en direction de l'autre contacteur de ladite paire, lesdits moyens de rappel élastiques de la ou desdites paires de contacteurs étant définis de manière à procurer une résistance globale à la fermeture de l'élément mobile inférieure à la force de rappel automatique de ce dernier procurée par les glissières.

Selon d'autres caractéristiques de l'invention, un contacteur d'une paire est intégré dans une fiche mâle apte à coopérer par emboîtement avec une fiche femelle intégrant l'autre contacteur.

Avantageusement, ledit meuble comprend des moyens d'auto-centrage des fiches mâle et femelle sous forme un évidement de la fiche femelle apte à recevoir la fiche mâle et dont au moins une partie d'au moins une des parois latérales dudit évidement est inclinée de manière à former un entonnoir.

De plus, le contacteur mobile se présente sous la forme d'au moins un piston coulissant en translation au sein d'un logement ménagé dans la fiche femelle et apte à être repoussé par les moyens de rappel élastique en direction de l'autre contacteur de ladite paire.

Préférentiellement, au moins une partie dudit piston est repoussée hors du logement en saillie par rapport au fond dudit évidement de manière à coopérer avec au moins une zone de contact disposée sur la fiche mâle.

Selon un mode de réalisation, les fiches sont aptes à équiper respectivement ledit caisson et ledit élément mobile au travers de moyens de réception de moyens de fixation, lesdits moyens de réception se présentant sous la forme d'au moins un orifice.

De plus, lesdits moyens de raccordement alimentent électriquement la façade d'au moins un élément mobile, ladite façade comprenant un panneau support d'un revêtement décor et recevant en périphérie un profilé d'encadrement, ledit revêtement décor étant constitué d'une plaque conductrice de lumière transmise depuis une source de rayonnement lumineux intégrée dans ledit profilé.

En particulier, ladite plaque est apte à diffuser en face avant un rayonnement lumineux reçu transversalement par ladite source de rayonnement lumineux.

D'autres caractéristiques et avantages de l'invention ressortiront de la description détaillée qui va suivre des modes de réalisation non limitatifs de l'invention, en référence aux figures annexées dans lesquelles :
- la figure 1 représente une vue en perspective d'un meuble selon l'invention ;
- la figure 2 est une vue en perspective d'un détail de l'invention ;
- la figure 3 est une vue en coupe d'un autre détail de l'invention ;
- la figure 4 est une vue coupe d'un détail de la façade d'un meuble selon l'invention ; et
- la figure 5 est une vue en perspective d'un détail de la façade d'un meuble selon l'invention.

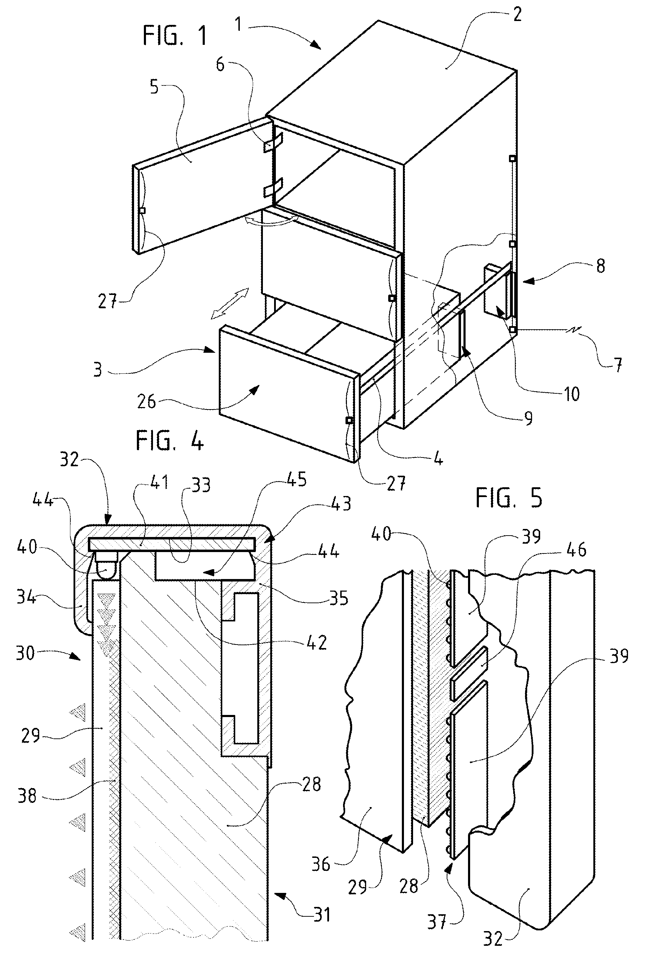

La présente invention concerne un meuble 1 comportant un caisson 2 recevant au moins un élément 3 mobile. Ce dernier peut être prévu mobile selon un déplacement en translation à l'intérieur dudit caisson 2. Cet élément mobile 3 est préférentiellement du type d'un tiroir monté sur des glissières 4, comme le montre la figure 1. Ledit caisson peut aussi comprend un élément mobile 3 du type d'une porte 5 articulée sur ledit caisson 2 au travers de charnières 6, ces dernières assurant le pivotement de ladite porte par rapport audit caisson 2.

Le but de l'invention est d'alimenter électriquement ledit élément 3 mobile en translation. En effet, l'alimentation d'une porte 5 peut être effectuée au travers de contacteurs électriques classiques connus de l'art antérieur. Dans le cas d'un tiroir, son alimentation doit prendre en compte son déplacement le long desdites glissières 4.

A ce propos, afin de faciliter la fermeture dudit tiroir, ces glissières 4 sont aptes, au moins en phase finale de fermeture, à assurer une force de rappel automatique dudit élément mobile 3 dans sa position refermée. Ainsi, le tiroir vient parfaitement s'insérer en se refermant dans le caisson 2 du meuble 1 sous l'action de son propre poids, initié manuellement ou non. Ces glissières 4 d'un type particulier sont de plus en plus utilisées dans la réalisation de meuble 1, en particulier mais non limitativement dans la fabrication de meuble 1 de cuisine.

Selon l'invention, le meuble 1 comprend une alimentation électrique 7. Cette alimentation 7 est préférentiellement disposée en partie arrière dudit caisson 2 et comprend un raccordement à un réseau de type domestique, par exemple sous forme d'une prise ou d'un faisceau électrique. A l'autre extrémité sont connectés des moyens de raccordement électrique 8 destinés à permettre le passage du courant depuis le caisson 2 vers l'élément mobile 3, à savoir ledit tiroir.

Pour ce faire, lesdits moyens de raccordement 8 se présentent sous la forme d'une ou plusieurs paires de contacteurs 9 et 10. Par conséquent, la connexion électrique au sein d'une paire s'effectue au travers du contact de chacun des contacteurs 9,10 en position de fermeture de l'élément mobile 3. Chaque paire comporte, d'une part, un contacteur 9 (ou 10) apte à équiper l'élément mobile 3 et, d'autre part, un contacteur 10 (ou 9) apte à équiper le caisson 2. On notera que l'un ou l'autre des contacteurs 9 ou 10 peut être indépendamment prévu, pour l'un, solidaire du dudit caisson 2 et donc fixe tandis que l'autre est solidaire dudit élément mobile 3 et par conséquent se déplace selon le mouvement de ce dernier.

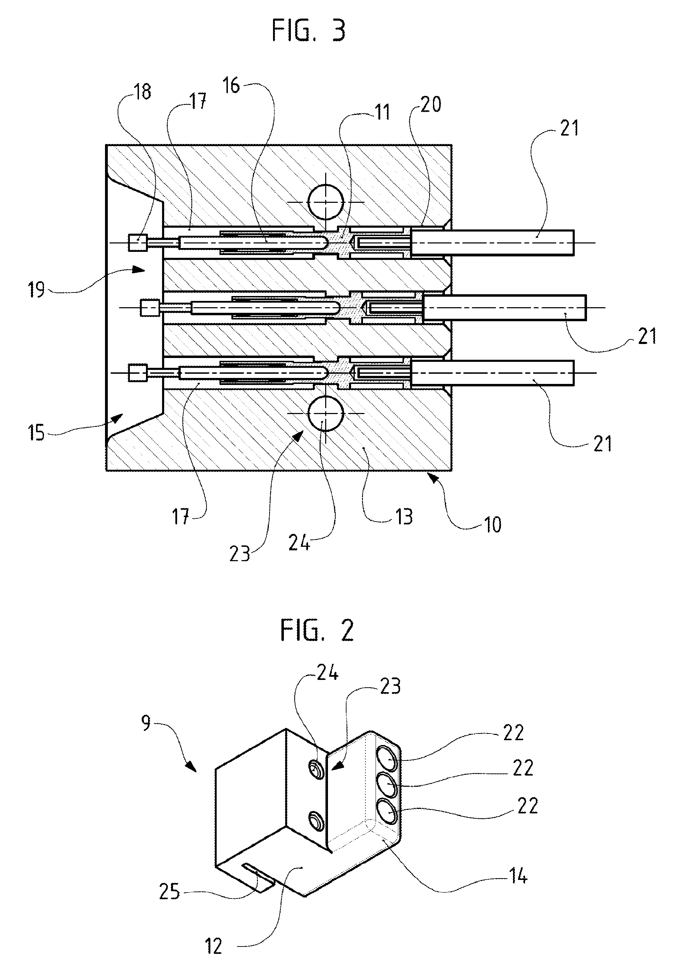

Selon le mode de réalisation préférentiel de l'invention, le contacteur mobile 9 est représenté sur la figure 2 tandis que le contacteur fixe 10 est visible sur la figure 3.

L'un au moins de ces contacteurs 10 (ou 9) est prévu mobile en tout ou partie. Il est apte à être repoussé par des moyens de rappel élastiques 11 en direction de l'autre contacteur 9 (ou 10) de ladite paire. En particulier, l'un au moins de ces contacteurs 10 (ou 9) est prévu mobile parallèlement au déplacement de l'élément mobile 3, soit en translation.

Avantageusement, lesdits moyens de rappel élastiques 11 de la ou desdites paires de contacteurs 9,10 sont définis de manière à procurer une résistance globale à la fermeture de l'élément mobile 3 inférieure à la force de rappel automatique de ce dernier procurée par les glissières 4.

On entend ici par résistance globale à la fermeture, la somme des résistances qu'offrent plusieurs paires de contacteurs 9,10 lors de la fermeture d'un élément mobile 3, dans le cas où plusieurs paires de contacteurs 9,10 sont fixées sur ledit élément mobile 3. Dans le cas d'une seule paire de contacteurs 9,10, la résistance globale équivaut à la résistance qu'offre cette unique paire. De plus, la résistance considérée est constituée des forces de frottement lors de l'emboîtement et/ou de la mise en contact des contacteurs 9 et 10, auxquelles s'ajoute la raideur des moyens de rappel élastique 11 du contacteur mobile 10 (ou 9).

Chaque contacteur 9 et 10 est réciproquement intégré dans des fiches 12 et 13 destinées à coopérer entre elles, d'une part, par mise en contact desdits contacteurs 9 et 10 et, d'autre part, par emboîtement d'une des fiches 12 avec l'autre fiche 13. Pour ce faire, la fiche 12 comprend une partie mâle 14 apte à coopérer avec une partie femelle 15 de la fiche 13.

La fiche 12 de type mâle est particulièrement visible sur la figure 2 tandis que la fiche 13 de type femelle est visible sur la figure 3.

Une paire de contacteurs 9,10 peut aussi comprendre des moyens d'auto-centrage 15 du contacteur 9 équipant l'élément mobile 3 par rapport au contacteur 10 équipant ledit caisson 2. Ces moyens 15 permettent de centrer les parties mâle 1' et femelle 15 lors de leur emboîtement, évitant ainsi tout risque de blocage dû à un éventuel jeu des glissières 4 ou au déplacement de l'élément mobile 3. Pour ce faire, les moyens d'auto-centrage 15 comprennent un évidement 19 de la fiche 13, formant la partie femelle 15, apte à recevoir la partie mâle 14 de la fiche 12.

De plus, dont au moins une partie d'au moins une des parois latérales dudit évidement 19 est inclinée de manière à former un entonnoir. On notera que ledit évidement 19 est sensiblement plus large au niveau de l'extrémité extérieure de la partie femelle 15 que la partie mâle 14. Lors de l'emboîtement de la partie mâle 14 avec la partie femelle 15, les contacteurs 9 et 10 se retrouvent alors parfaitement alignés.

De plus, le contacteurs fixe 10 peut avantageusement se présenter sous la forme d'au moins un piston 16 coulissant en translation au sein d'un logement 17 ménagé dans la fiche 13. Ce piston 16 est apte à être repoussé par les moyens élastiques 11 en direction de l'évidement 19 formant la partie femelle 15, soit en direction de l'autre contacteur 9 de ladite paire. De préférence, au moins une partie 18 dudit piston 16 est repoussée hors du logement 17, en saillie par rapport au fond dudit évidement 19, assurant ainsi le contact parfait avec la partie mâle 14 du contacteur 9.

Comme visible sur la figure 3, le connecteur 10 comprend trois pistons 16 montés en coulissement le long de trois logements 17.

On notera que le logement 17 est constitué ou comprend un revêtement assurant la conductivité électrique de sorte que le piston 16 soit toujours électriquement raccordé avec le logement 17. De plus, l'extrémité 20 d'un logement 17 est solidaire d'un câble 21 pour connecter le connecteur 10 à l'alimentation 7.

Comme visible sur la figure 2, le connecteur 9 comprend, au niveau de la partie mâle 14 de sa fiche 12, au moins une zone de contact 22 disposée à l'extrémité de la partie mâle 12. Cette zone de contact 22 se retrouve en vis-à-vis du contacteur d'un piston 16 saillant au sein de la partie femelle 15 de la fiche 13, lors de l'emboîtement des connecteurs 9 et 10 entre eux. La zone de contact 22 est encore solidaire d'au moins un câble 21 pour connecter le connecteur 9 à un dispositif devant être alimenté. Comme visible sur la figure 2, ces zones de contact 22 peuvent être au nombre de trois, reliées à trois câbles 21 et destinées à coopérer avec trois pistons 16.

Le piston 16 et la zone de contact 22 jouent aussi le rôle de pièces d'usure assurant ainsi un contact électrique constant au fil du temps.

Les fiches 12 et 13 sont aptes à équiper ledit caisson 2 et ledit élément mobile 3 au travers de moyens de réception 23 de moyens de fixation, non représentés. Ces moyens de fixation peuvent se présentent préférentiellement sous la forme de vis ou analogue coopérant avec la plaque de fond du tiroir ou celle du caisson 2.

De manière toute particulière, comme visible sur les figures 2 et 3, les moyens de réception 23 des fiches 12 et 13 comprennent des orifices 24 destinés à recevoir lesdits éléments de fixation. Ces orifices sont disposés de manière à assujettir les fiches 12 et 13 sur les parois de l'élément mobile 3 ou du caisson 2.

Selon un mode de réalisation visible sur la figure 2, la fiche 12 comprend une fente 25 dans laquelle peut être glissée la plaque de fond d'un tiroir ou dudit caisson 2. Cette fente 25 a une largeur sensiblement égale à l'épaisseur de ladite plaque.

Il convient de noter que les fiches 12 et 13 peuvent être réalisées en tout type de matériau, notamment plastique, par tout type de procédé, notamment par moulage.

De plus, dans le cas de plusieurs éléments mobiles 3, comme visibles sur la figure 1, les connecteurs 10 fixés audit caisson 2 peuvent être reliés entre eux, notamment en parallèle, et directement à l'alimentation électrique 7.

Le meuble 1 selon l'invention comprend donc des moyens de raccordement 7 permettant un contact électrique n'empêchant pas le rappel automatique de la fermeture de ses tiroirs, et qui est de surcroît pérenne dans le temps. De plus, le contact s'opère parfaitement au travers d'un emboîtement parfait des fiches 12 et 13.

Selon le mode préférentiel de réalisation, l'alimentation électrique d'un élément mobile 3 selon l'invention est destinée, mais non limitativement, à alimenter en électricité la façade 26 dudit meuble 1, en particulier des éléments 27 de façade 26 lumineuse.

Le caisson 2 comprend une hauteur correspondant à plusieurs unités de façade 26. Dans la figure 1, le meuble 2 comprend un caisson 2 d'une hauteur de six unités de façade 26. Le caisson 2 reçoit alors trois éléments 27 de façade 26 ayant chacun une hauteur équivalente à deux unités de façade 26. On notera qu'un élément 27 de façade 26 peut avoir, tout comme le caisson 2, une hauteur minimale d'une unité de façade 26.

Comme visible sur les figures 4 et 5, chaque façade 26, plus précisément, chaque élément 27 de façade 26 comprend un panneau support 28 d'un revêtement décor 29. Un tel panneau support 28 peut être constitué d'une âme en bois, ou en matériau à base de bois, tel un panneau de particules agglomérées, MDF, HDF, ou encore en matériau synthétique, composite ou autre. Selon le mode de réalisation visible sur les figures 4 et 5, le revêtement décor 29 vient en face avant 30 du panneau support 28 tandis que la face arrière 31 laisse le panneau support 28 apparent.

Ce panneau support 28 reçoit en périphérie un profilé d'encadrement 32 servant notamment à solidariser entre eux le panneau support 28 et le revêtement décor 29. Particulièrement visible sur la figure 4, ce profilé d'encadrement 32 se présente sous la forme d'une pièce en U comportant un fond 33 d'où s'étendent deux parois 34 et 35 parallèles positionnées après emboîtement respectivement en faces avant et arrière dudit panneau support 28. De manière particulière, les charnières 6 ou glissières 4 peuvent être fixées audit profilé 32 au travers de sa paroi arrière 35.

Avantageusement, le revêtement décor 29 est constitué d'une plaque 36 conductrice de lumière transmise depuis une source 37 de rayonnement lumineux intégrée dans le profilé d'encadrement 32. Pour ce faire, ledit revêtement décor 29 est composé en tout ou partie d'au moins une plaque 36 apte à diffuser en face avant 30 un rayonnement lumineux reçu transversalement. Cette plaque 36 peut avantageusement être translucide et comprendre des moyens 38 de réflexion de la lumière. Ces derniers peuvent être aménagés en arrière du revêtement décor 2 ou intégré à ce dernier.

Par exemple, la plaque 36 peut être constituée de polyméthylméthacrylate, usuellement dénommé acryl. Une couche réfléchissante peut être ajoutée directement dans la plaque d'acryl ou en surface de cette dernière.

Avantageusement, pour être entièrement compatible avec les éléments 27 de façade 26, la source de rayonnement lumineux 37 est composée d'au moins un ou d'une juxtaposition de modules éclairants 39, un module 39 étant ajusté en dimension selon une hauteur minimale d'au moins une unité de façade 26 correspondant à une hauteur minimale de façade 26, en particulier d'un élément 27 de façade 26.

Un tel module éclairant 39 se compose de diodes électroluminescentes 40 (LED) connectées à une carte 41 de gestion électronique au travers de laquelle elles sont alimentées. Les LED 40 peuvent avantageusement changer de couleur en fonction des paramètres électriques qui leurs sont transmis, permettant ainsi de parcourir tout le spectre lumineux.

Selon le mode préférentiel de réalisation, un module éclairant 39 est interposé entre le chant périphérique 42 du panneau support 28 et le fond 33 dudit profilé d'encadrement 32. Un module 39 est alors fixé au profilé d'encadrement 32 au travers de moyens de fixation 43 définis par un redent 44 ménagé sur l'intérieur de chaque paroi 34 et 35 dudit profilé 32. La carte 41 vient alors s'emboîter par encliquetage. On notera qu'un logement 45 peut être ménagé sur le chant 42 du panneau support 28 de manière à former un espace pour les composants de la carte 41.

Le profilé d'encadrement 32 comprend des moyens de dissipation par conduction de la chaleur produite par la source lumineuse 37. En effet, ledit profilé d'encadrement 32 est composé en matière métallique, préférentiellement en aluminium, ayant un rôle de dissipateur suffisant, évitant ainsi l'addition d'un système de refroidissement de la source lumineuse 37.

Selon un mode de réalisation, les diodes 40 sont saillantes orthogonalement à ladite carte de gestion 41 de manière à transmettre un rayonnement lumineux au travers dudit revêtement décor 29. Pour ce faire, les diodes 40 sont en contact ou proche et orientées sur la tranche de la plaque 36, cette dernière étant apte à diffuser en face avant un rayonnement lumineux reçu transversalement.

De manière avantageuse, comme visible sur la figure 5, plusieurs modules éclairants 39 peuvent être juxtaposés en vue d'éclairer l'intégralité d'un élément 27 de façade 26. A ce propos, un module éclairant 39 possède donc une hauteur sensiblement égale à une unité de façade 26. Ainsi, des modules éclairants 39 juxtaposés comprennent des moyens mutuels de raccordement 46 aptes à les alimenter électriquement. Cette connexion en parallèle permet de gérer et alimenter chaque module 39 compris sur un élément 27 de façade 26.

La présente invention permet donc d'alimenter efficacement une façade 26 d'un meuble 1 au travers d'un élément mobile 3, préférentiellement un tiroir.

## Revendications

1. Meuble (1) comportant au moins un caisson (2) recevant au moins un élément mobile (3) en translation de type tiroir monté sur glissières (4) aptes, au moins en phase finale de fermeture, à assurer une force de rappel automatique dudit élément mobile (3) dans sa position refermée, **caractérisé par le fait qu'**il comporte des moyens (8) de raccordement électrique par contact sous forme d'une ou plusieurs paires de contacteurs (9,10), chaque paire comportant un contacteur (9) apte à équiper l'élément mobile (3), l'autre contacteur (10) équipant le caisson (2), l'un au moins de ces contacteurs (10), prévu mobile parallèlement au déplacement de l'élément mobile (3), est apte à être repoussé par des moyens de rappel élastiques (11) en direction de l'autre contacteur (9) de ladite paire, lesdits moyens de rappel élastiques (11) de la ou desdites paires de contacteurs (9,10) étant définis de manière à procurer une résistance globale à la fermeture de l'élément mobile (3) inférieure à la force de rappel automatique de ce dernier procurée par les glissières (4).

2. Meuble (1) selon la revendication 1, **caractérisé par le fait qu'**un contacteur (9) d'une paire est intégré dans une fiche (12) mâle apte à coopérer par emboîtement avec une fiche (13) femelle intégrant l'autre contacteur (10).

3. Meuble (1) selon la revendication 2, **caractérisé par le fait qu'**il comprend des moyens d'auto-centrage des fiches mâle (12) et femelle (13) sous forme un évidement (19) de la fiche femelle (13) apte à recevoir la fiche mâle (12) et dont au moins une partie d'au moins une des parois latérales dudit évidement (19) est inclinée de manière à former un entonnoir.

4. Meuble (1) selon l'une quelconque des revendications 2 ou 3, **caractérisé par le fait que** le contacteur (10) mobile se présente sous la forme d'au moins un piston (16) coulissant en translation au sein d'un logement (17) ménagé dans la fiche femelle (13) et apte à être repoussé par les moyens de rappel élastique (11) en direction de l'autre contacteur (9) de ladite paire.

5. Meuble (1) selon les revendications 4 et 5,
**caractérisé par le fait qu'**au moins une partie (18) dudit piston (16) est repoussée hors du logement (17) en saillie par rapport au fond dudit évidement (19) de manière à coopérer avec au moins une zone (22) de contact disposée sur la fiche mâle (12).

6. Meuble (1) selon l'une quelconque des revendications 3 à 7, **caractérisé par le fait que** les fiches (12,13) sont aptes à équiper respectivement ledit caisson (2) et ledit élément mobile (3) au travers de moyens de réception (23) de moyens de fixation, lesdits moyens de réception (23) se présentant sous la forme d'au moins un orifice (24).

7. Meuble (1) selon l'une quelconque des revendications précédentes, **caractérisé par le fait que** lesdits moyens de raccordement (8) alimentent électriquement la façade (26) d'au moins un élément mobile (3), ladite façade 26 comprenant un panneau (28) support d'un revêtement décor (29) et recevant en périphérie un profilé d'encadrement (32), ledit revêtement décor (29) étant constitué d'une plaque (36) conductrice de lumière transmise depuis une source de rayonnement lumineux (37) intégrée dans ledit profilé (32).

8. Meuble (1) selon la revendication 7, **caractérisé par le fait que** ladite plaque (36) est apte à diffuser en face avant (30) un rayonnement lumineux reçu transversalement par ladite source de rayonnement lumineux (37).
